# EUROPEAN PATENT APPLICATION

(11) **EP 4 516 967 A1**
(43) Date of publication of application: **05.03.2025**
(21) Application number: 23815503.0
(22) Date of filing: 03.03.2023
(51) Int. Cl.: C25B 9/23, C25B 1/04, C25B 9/00, C25B 9/21, C25B 9/60, C25B 9/65, C25B 9/75, C25B 9/77, C25B 11/052, C25B 11/075, C25B 11/077, C25B 11/081, C25B 11/089, C25B 13/04

(54) **MEMBRANE ELECTRODE ASSEMBLY, ELECTROLYSIS CELL, ELECTROLYSIS DEVICE, AND METHOD FOR PRODUCING MEMBRANE ELECTRODE ASSEMBLY**

(30) Priority: 03.06.2022 JP 2022090938
(71) Applicant: Mitsubishi Heavy Industries, Ltd., Tokyo 100-8332 (JP)
(72) Inventor: MUKAI, Daisuke, Tokyo 100-8332 (JP); TAGAMI, Naoto, Tokyo 100-8332 (JP); SUKENOBU, Takahiro, Tokyo 100-8332 (JP); MIYOSHI, Takahito, Tokyo 100-8332 (JP); TAJIMA, Hidehiko, Tokyo 100-8332 (JP); FURUKAWA, Shoichi, Tokyo 100-8332 (JP)
(74) Representative: Studio Torta S.p.A.
(86) International application number: PCT/JP2023/008090
(87) International publication number: WO 2023/233740

(57) **Abstract**

A membrane electrode assembly according to the present disclosure includes a first ion exchange membrane that has a first surface and a second surface located on a side opposite to the first surface, a second ion exchange membrane that has a third surface and a fourth surface located on a side opposite to the third surface, a cathode catalyst layer configured to be provided on the first surface, and an anode catalyst layer configured to be provided on the third surface. The first ion exchange membrane and the second ion exchange membrane are anion exchange membranes having hydroxide ion conductivity and are integrated by making the second surface and the fourth surface face each other.

## Description

### TECHNICAL FIELD

The present disclosure relates to a membrane electrode assembly, an electrolytic cell, an electrolysis device, and a method of manufacturing the membrane electrode assembly.

Priority is claimed on Japanese Patent Application No. 2022-90938, filed on June 3, 2022, the content of which is incorporated herein by reference.

### BACKGROUND ART

Patent Document 1 discloses a laminated electrolyte membrane including a first electrolyte membrane, a second electrolyte membrane, a nanosheet laminated catalyst layer provided between the first electrolyte membrane and the second electrolyte membrane and having a catalyst and a void, and a transfer layer provided between the second electrolyte membrane and the nanosheet laminated catalyst layer, as a laminated electrolyte membrane used in polymer electrolyte membrane (PEM)-type water electrolysis. The nanosheet laminated catalyst layer is provided in order to suppress the crossover of hydrogen and oxygen. According to such a configuration, it is possible to obtain a laminated electrolyte membrane having a low crossover and a low membrane resistance. A first electrode including a cathode catalyst layer and a second electrode including an anode catalyst layer are bonded to the laminated electrolyte membrane after the first electrolyte membrane, the second electrolyte membrane, the nanosheet laminated catalyst layer, and the transfer layer are integrated as the laminated electrolyte membrane.

Patent Document 2 discloses a method of manufacturing an electrode, in which a support film and an EPTFE film are overlapped and passed between two metal rolls, a mixed liquid is supplied to impregnate a void in the EPTFE film with the mixed liquid, and then the support film is removed to obtain an electrode.

### Citation List

### Patent Documents

Patent Document 1: Japanese Patent No. 6952664
Patent Document 2: Japanese Patent No. 3504021

### SUMMARY OF INVENTION

### Technical Problem

Incidentally, in a case where catalyst layers are provided on both surfaces of the ion exchange membrane, an uneven portion may occur in the catalyst layer in a step of providing the catalyst layer on one surface of the ion exchange membrane. In this case, the uneven portion may affect a step of providing the catalyst layer on the other surface of the ion exchange membrane. As a result, it is difficult to manufacture a membrane electrode assembly, and the performance of an electrolysis device may not be stable.

The present disclosure has been made in order to solve the above-described problems, and an object thereof is to provide a membrane electrode assembly, an electrolytic cell, an electrolysis device, and a method of manufacturing the membrane electrode assembly, which can improve stability of a performance of the electrolysis device.

### Solution to problem

In order to solve the above-described problems, a membrane electrode assembly according to the present disclosure includes a first ion exchange membrane that has a first surface and a second surface located on a side opposite to the first surface, a second ion exchange membrane that has a third surface and a fourth surface located on a side opposite to the third surface, a cathode catalyst layer configured to be provided on the first surface, and an anode catalyst layer configured to be provided on the third surface. The first ion exchange membrane and the second ion exchange membrane are anion exchange membranes having hydroxide ion conductivity and are integrated by making the second surface and the fourth surface face each other.

In order to solve the above-described problems, an electrolytic cell according to the present disclosure includes a first separator, a second separator, and a membrane electrode assembly disposed between the first separator and the second separator. The membrane electrode assembly includes a first ion exchange membrane that has a first surface and a second surface located on a side opposite to the first surface, a second ion exchange membrane that has a third surface and a fourth surface located on a side opposite to the third surface, a cathode catalyst layer configured to be provided on the first surface, and an anode catalyst layer configured to be provided on the third surface. The first ion exchange membrane and the second ion exchange membrane are anion exchange membranes having hydroxide ion conductivity and are integrated by making the second surface and the fourth surface face each other.

In order to solve the above-described problems, an electrolysis device according to the present disclosure includes an electrolytic cell, an electrolyte supply unit configured to supply an electrolyte to the electrolytic cell; and a power supply unit configured to apply a voltage to the electrolytic cell. The electrolytic cell includes a first separator, a second separator, and a membrane electrode assembly disposed between the first separator and the second separator. The membrane electrode assembly includes a first ion exchange membrane that has a first surface and a second surface located on a side opposite to the first surface, a second ion exchange membrane that has a third surface and a fourth surface located on a side opposite to the third surface, a cathode catalyst layer configured to be provided on the first surface, and an anode catalyst layer configured to be provided on the third surface. The first ion exchange membrane and the second ion exchange membrane are anion exchange membranes having hydroxide ion conductivity and are integrated by making the second surface and the fourth surface face each other.

In order to solve the above-described problem, a method of manufacturing a membrane electrode assembly according to the present disclosure includes providing a cathode catalyst layer on a first surface of a first ion exchange membrane, providing an anode catalyst layer on a third surface of a second ion exchange membrane and integrating the first ion exchange membrane and the second ion exchange membrane by facing a second surface of the first ion exchange membrane and a fourth surface of the second ion exchange membrane, after providing the cathode catalyst layer on the first surface and providing the anode catalyst layer on the third surface.

### Advantageous Effects of Invention

According to the membrane electrode assembly, the electrolytic cell, the electrolysis device, and the method of manufacturing the membrane electrode assembly of the present disclosure, it is possible to improve the stability of the performance of the electrolysis device.

### BRIEF DESCRIPTION OF DRAWINGS

[FIG. 1] A schematic configuration diagram representing an overall configuration of an electrolysis device according to a first embodiment of the present disclosure.
[FIG. 2] A cross-sectional view schematically representing an electrolytic cell according to the first embodiment of the present disclosure.
[FIG. 3] An exploded perspective view representing the electrolytic cell according to a first embodiment of the present disclosure.
[FIG. 4] A cross-sectional view representing the electrolytic cell according to the first embodiment of the present disclosure.
[FIG. 5] A cross-sectional view representing a method of manufacturing a membrane electrode assembly according to the first embodiment of the present disclosure.
[FIG. 6] A cross-sectional view representing an electrolytic cell of a modification example of the first embodiment of the present disclosure.
[FIG. 7] A cross-sectional view representing an electrolytic cell according to a second embodiment of the present disclosure.
[FIG. 8] A graph describing an action of the electrolytic cell according to the second embodiment of the present disclosure.
[FIG. 9] A graph describing an action of the electrolytic cell according to the second embodiment of the present disclosure.
[FIG. 10] A cross-sectional view representing an electrolytic cell according to a third embodiment of the present disclosure.

### DESCRIPTION OF EMBODIMENTS

Hereinafter, a membrane electrode assembly, an electrolytic cell, an electrolysis device, and a method of manufacturing the membrane electrode assembly according to an embodiment of the present disclosure will be described with reference to the accompanying drawings. In the following description, the same reference signs are assigned to configurations having the same or similar functions. In the present disclosure, "face each other" means that two members overlap each other in a case of being viewed in a certain direction, and another member (for example, another layer) may be present between the two members.

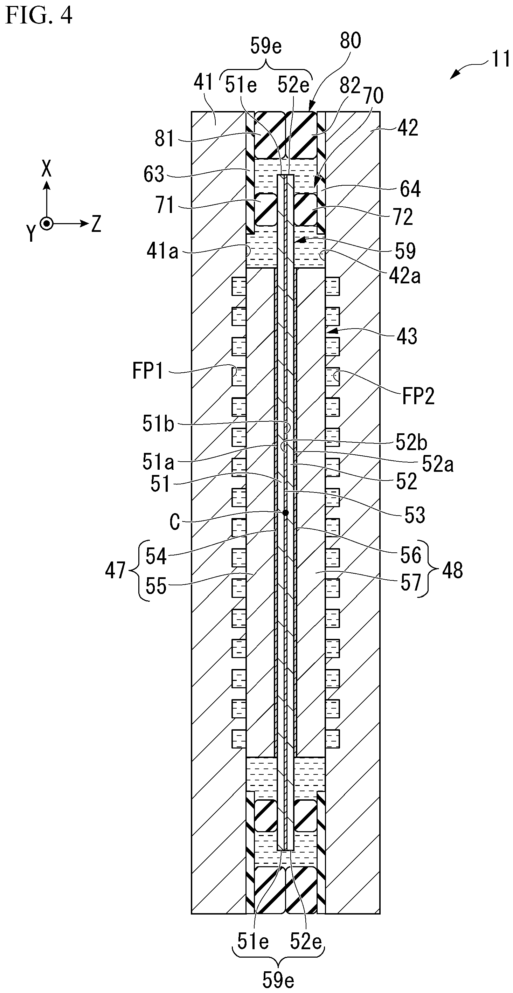

First, a Z direction, an X direction, and a Y direction are defined with reference to FIG. 4. The Z direction is a direction from a first separator 41 to a second separator 42 described later.

The X direction is a direction intersecting (for example, orthogonal to) the Z direction and is a direction from a central portion C of a membrane electrode assembly 43 described later toward one end portion of the membrane electrode assembly 43. The Y direction is a direction intersecting (for example, orthogonal to) the Z direction and the X direction and is, for example, a depth direction of the paper surface in FIG. 4. In the present disclosure, the term of "area" means an area in a case of being viewed in the Z direction (that is, an area extending in the X direction and the Y direction). In addition, in the present disclosure, the term of "external size" means an external size in the case of being viewed in the Z direction. That is, the terms of "external size" and "area" may mean substantially the same thing and may be appropriately interpreted with each other.

### (First Embodiment)

### <1. Configuration of Electrolysis Device>

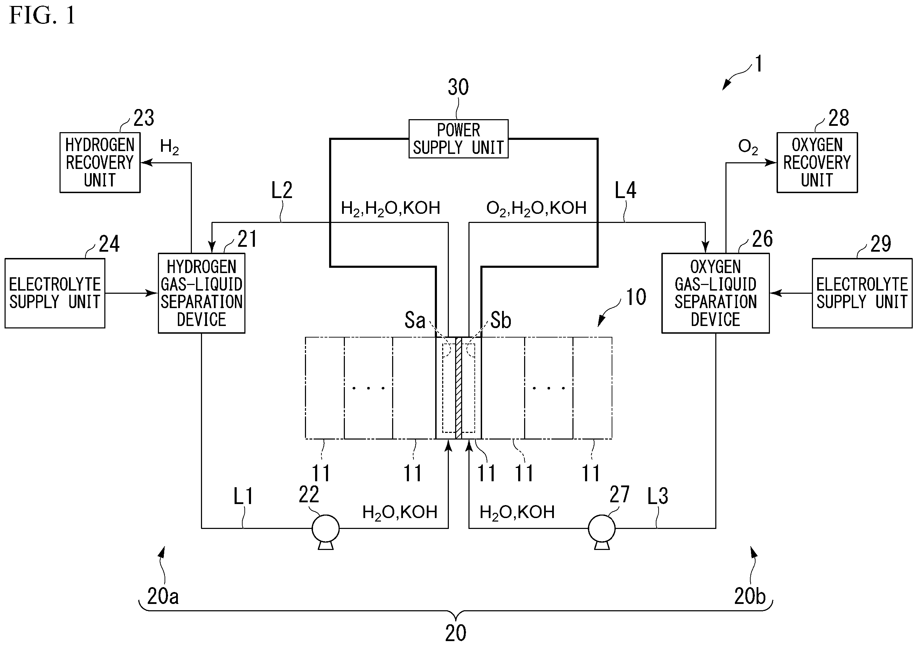

FIG. 1 is a schematic configuration diagram showing an overall configuration of an electrolysis device 1 according to a first embodiment.

For example, the electrolysis device 1 is a device that generates hydrogen by electrolyzing water contained in an electrolyte. For example, the electrolysis device 1 is an anion exchange membrane (AEM)-type electrolytic device. However, the electrolysis device 1 is not limited to the above example and may be an electrolysis device having a different type, such as a device for electrolytic reduction of carbon dioxide.

For example, the electrolysis device 1 is provided with an electrolytic cell stack 10, an electrolyte supply unit 20, and a power supply unit 30.

### (Electrolytic Cell Stack)

The electrolytic cell stack 10 is an assembly of a plurality of electrolytic cells 11. For example, the electrolytic cell stack 10 is formed by arranging the plurality of electrolytic cells 11 in one direction. Each electrolytic cell 11 includes a cathode chamber Sa and an anode chamber Sb. The electrolytic cell 11 will be described later in detail.

### (Electrolyte Supply Unit)

The electrolyte supply unit 20 is a supply unit that supplies an electrolyte to each electrolytic cell 11.

For example, the electrolyte is pure water or an alkaline aqueous solution. The electrolyte supply unit 20 includes a cathode-side supply unit 20a and an anode-side supply unit 20b.

The cathode-side supply unit 20a is a supply unit that supplies an electrolyte to the cathode chamber Sa of each electrolytic cell 11. For example, the cathode-side supply unit 20a includes a hydrogen gas-liquid separation device 21, a first pump 22, a hydrogen recovery unit 23, a first electrolyte supply unit 24, and piping lines L1 and L2.

The hydrogen gas-liquid separation device 21 stores the electrolyte. A supply port of the hydrogen gas-liquid separation device 21 is connected to the cathode chamber Sa of the electrolytic cell 11 via the piping line L1.

The first pump 22 is provided in the middle of the piping line L1 and sends the electrolyte stored in the hydrogen gas-liquid separation device 21 toward the cathode chamber Sa of the electrolytic cell 11.

The return port of the hydrogen gas-liquid separation device 21 is connected to the cathode chamber Sa of the electrolytic cell 11 via the piping line L2. An electrolyte containing hydrogen generated in the electrolytic cell 11 flows into the hydrogen-gas-liquid separation device 21 from the electrolytic cell 11. The hydrogen gas-liquid separation device 21 has a gas-liquid separation unit that separates hydrogen contained in the electrolyte. The hydrogen separated from the electrolyte by the hydrogen gas-liquid separation device 21 is recovered by the hydrogen recovery unit 23. The hydrogen gas-liquid separation device 21 is replenished with the electrolyte from the first electrolyte supply unit 24.

On the other hand, the anode-side supply unit 20b is a supply unit that supplies an electrolyte to the anode chamber Sb of each electrolytic cell 11. For example, the anode-side supply unit 20b includes an oxygen gas-liquid separation device 26, a second pump 27, an oxygen recovery unit 28, a second electrolyte supply unit 29, and piping lines L3 and L4.

The oxygen gas-liquid separation device 26 stores the electrolyte. A supply port of the oxygen gas-liquid separation device 26 is connected to the anode chamber Sb of the electrolytic cell 11 via the piping line L3.

The second pump 27 is provided in the middle of the piping line L3 and sends the electrolyte stored in the oxygen gas-liquid separation device 26 toward the anode chamber Sb of the electrolytic cell 11.

The return port of the oxygen gas-liquid separation device 26 is connected to the anode chamber Sb of the electrolytic cell 11 via the piping line L4. An electrolyte containing oxygen generated in the electrolytic cell 11 flows into the oxygen gas-liquid separation device 26 from the electrolytic cell 11. The oxygen gas-liquid separation device 26 has a gas-liquid separation unit that separates oxygen contained in the electrolyte. Oxygen separated from the electrolyte by the oxygen gas-liquid separation device 26 is recovered by the oxygen recovery unit 28. The oxygen gas-liquid separation device 26 is replenished with the electrolyte from the second electrolyte supply unit 29.

### (Power Supply Unit)

The power supply unit 30 is a direct current power supply device that applies a voltage to the electrolytic cell 11. The power supply unit 30 applies a direct current voltage desired for the electrolysis of the electrolyte between the anode and the cathode of the electrolytic cell 11.

### <2. Configuration of Electrolytic Cell>

### <2. 1 Basic Structure of Electrolytic Cell>

Next, the electrolytic cell 11 will be described in detail.

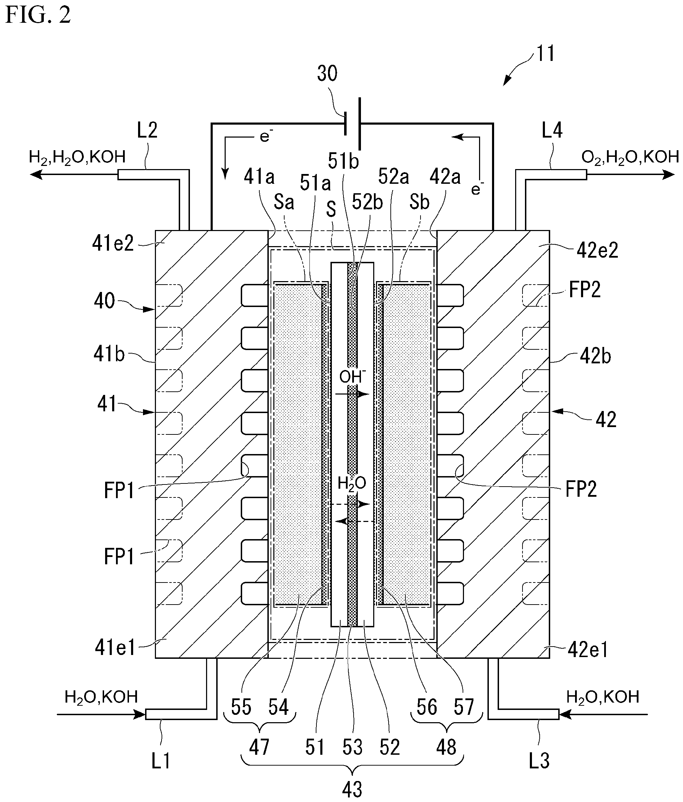

FIG. 2 is a cross-sectional view schematically showing the electrolytic cell 11. For example, the electrolytic cell 11 includes a first separator 41, a second separator 42, and a membrane electrode assembly 43.

### (First Separator)

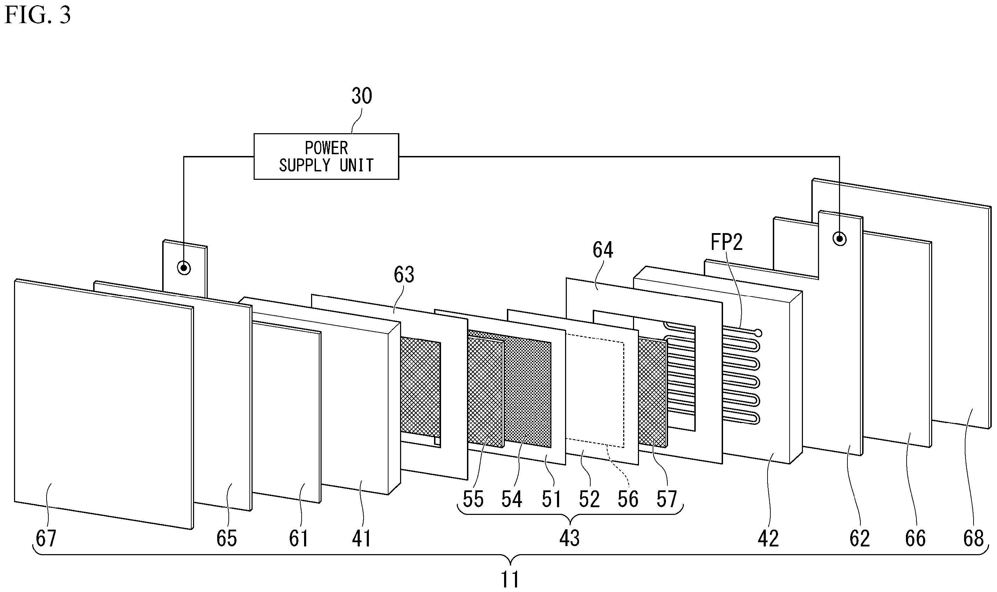

The first separator 41 is a member that defines one surface of an internal space S of the electrolytic cell 11. The internal space S is a space including the cathode chamber Sa and the anode chamber Sb described later. For example, the first separator 41 has a rectangular plate shape and includes a metal member. For example, a negative voltage is applied to the first separator 41 from the power supply unit 30 via a first current collector 61 (refer to FIG. 3) described later.

The first separator 41 has a first end portion 41el (for example, a lower end portion) and a second end portion 41e2 (for example, an upper end portion) located on a side opposite to the first end portion 41e1. The above-described piping line L1 is connected to the first end portion 41e1 of the first separator 41. The above-described piping line L2 is connected to the second end portion 41e2 of the first separator 41. The first separator 41 has a first inner surface 41a that faces the cathode chamber Sa described later. A first flow path FP1 through which the electrolyte supplied from the piping line L1 flows is formed on the first inner surface 41a. For example, the first flow path FP1 is a groove provided in the first inner surface 41a. The electrolyte that has flowed through the first flow path FP1 is discharged to the outside of the electrolytic cell 11 through the piping line L2. Each structure (for example, a flow path structure) shown in FIG. 2 is merely an example and does not limit the content of the present embodiment. For example, various structures can be used as the flow path structure depending on the size, purpose, and use environment of the device. The same applies to each structure shown in other drawings.

### (Second Separator)

The second separator 42 is a member that is disposed with an internal space S between the second separator 42 and at least part of the first separator 41 and that defines the other surface of the internal space S.

For example, the second separator 42 has a rectangular plate shape and includes a metal member. A positive voltage is applied to the second separator 42 from the power supply unit 30 via a second current collector 62 (refer to FIG. 3) described later. The first separator 41 and the second separator 42 included in the same electrolytic cell 11 form an electrolyzer 40 of the electrolytic cell 11 as a pair of separators.

The second separator 42 has a first end portion 42e1 (for example, a lower end portion) and a second end portion 42e2 (for example, an upper end portion) located on a side opposite to the first end portion 42e1. The above-described piping line L3 is connected to the first end portion 42e1 of the second separator 42. The above-described piping line L4 is connected to the second end portion 42e2 of the second separator 42. The second separator 42 has a second inner surface 42a that faces the anode chamber Sb described later. A second flow path FP2 through which the electrolyte supplied from the piping line L3 flows is formed on the second inner surface 42a. For example, the second flow path FP2 is a groove provided in the second inner surface 42a. The electrolyte that has flowed through the second flow path FP2 is discharged to the outside of the electrolytic cell 11 through the piping line L4.

Here, for convenience of description, a configuration in which the first inner surface 41a of the first separator 41 has a groove for a flow path (first flow path FP1) and the second inner surface 42a of the second separator 42 has a groove for a flow path (second flow path FP2) is described. However, for example, the first separator 41 of the electrolytic cell 11 included in the electrolytic cell stack 10 (refer to FIG. 1) may be a bipolar plate having the same groove for a flow path (first flow path FP1, shown by a two-dot chain line in FIG. 2) on a surface 41b opposite to the first inner surface 41a in addition to the first inner surface 41a. In addition, the second separator 42 of the electrolytic cell 11 included in the electrolytic cell stack 10 may be a bipolar plate having the same groove for a flow path (second flow path FP2, shown by a two-dot chain line in FIG. 2) on a surface 42b opposite to the second inner surface 42a in addition to the second inner surface 42a. The grooves for flow paths provided on both surfaces of the first separator 41 may have different shapes and dispositions. In addition, the grooves for flow paths provided on both surfaces of the second separator 42 may have different shapes and dispositions.

A membrane electrode assembly (MEA) 43 is a structure in which an ion exchange membrane, a catalyst, and a power supply body are assembled. The membrane electrode assembly 43 is disposed between the first separator 41 and the second separator 42 and is located in the internal space S. For example, the membrane electrode assembly 43 includes a first ion exchange membrane 51, a second ion exchange membrane 52, an ionomer layer 53, a cathode catalyst layer 54, a cathode power supply body 55, an anode catalyst layer 56, and an anode power supply body 57.

### (First Ion Exchange Membrane)

The first ion exchange membrane 51 is a membrane that selectively allows ions to permeate. For example, the first ion exchange membrane 51 is a solid polymer electrolyte membrane. For example, the first ion exchange membrane 51 is an anion exchange membrane (AEM) having hydroxide ion conductivity. However, the first ion exchange membrane 51 is not limited to the above-described example and may be an ion exchange membrane having a type different from the above-described example. For example, the first ion exchange membrane 51 has a rectangular sheet shape. The external size of the first ion exchange membrane 51 is smaller than the external size of the first separator 41 or the second separator 42. The first ion exchange membrane 51 is disposed between the first separator 41 and the second separator 42 and is located in the above-described internal space S. The first ion exchange membrane 51 has a first surface 51a facing the first inner surface 41a of the first separator 41 and a second surface 51b located on a side opposite to the first surface 51a. In the internal space S, the cathode chamber Sa is defined between the first surface 51a of the first ion exchange membrane 51 and the first inner surface 41a of the first separator 41.

In the cathode chamber Sa, in a case where a voltage is applied to the electrolytic cell 11, the following chemical reaction occurs, and hydrogen is generated from the electrolyte. In the present application, "XX is generated" means that another substance may be simultaneously generated with the generation of XX. The hydroxide ions generated in the cathode chamber Sa pass through the membrane electrode assembly 43 and move from the cathode chamber Sa to the anode chamber Sb.

2H₂O + 2e⁻ → H₂ + 2OH⁻

### (Second Ion Exchange Membrane)

The second ion exchange membrane 52 is a membrane that selectively allows ions to permeate. For example, the second ion exchange membrane 52 is a solid polymer electrolyte membrane. For example, the second ion exchange membrane 52 is an anion exchange membrane having hydroxide ion conductivity. However, the second ion exchange membrane 52 is not limited to the above-described example and may be an ion exchange membrane having a type different from the above-described example. For example, the second ion exchange membrane 52 has a rectangular sheet shape. The external size of the second ion exchange membrane 52 is smaller than the external size of the first separator 41 or the second separator 42. For example, the external size of the second ion exchange membrane 52 is the same as the external size of the first ion exchange membrane 51. The second ion exchange membrane 52 is disposed between the first separator 41 and the second separator 42 and is located in the above-described internal space S. The second ion exchange membrane 52 has a third surface 52a facing the second inner surface 42a of the second separator 42 and a fourth surface 52b located on a side opposite to the third surface 52a. In the internal space S, the anode chamber Sb is defined between the third surface 52a of the second ion exchange membrane 52 and the second inner surface 42a of the second separator 42.

In the anode chamber Sb, in a case where a voltage is applied to the electrolytic cell 11, the following chemical reaction occurs, and oxygen is generated from the electrolyte.

2OH⁻ → 1/2O₂ + H₂O + 2e⁻

As a result, in a case of being viewed in the electrolytic cell 11 as a whole, the following chemical reaction occurs.

H₂O → H₂ + 1/2O₂

In the present disclosure, the ordinal numbers such as "first" and "second" attached to the names of the components are for convenience of description. For example, names such as "third" and "fourth" do not assume that the names "first" and "second" are present for the same member. In the present embodiment, the names of "third surface 52a" and "fourth surface 52b" of the second ion exchange membrane 52 do not assume that the first surface and the second surface are present in the second ion exchange membrane 52. Therefore, the names of "third surface 52a" and "fourth surface 52b" may be read as "first surface 52a" and "second surface 52b" of the second ion exchange membrane 52.

In the present embodiment, the first ion exchange membrane 51 and the second ion exchange membrane 52 are integrated by facing the second surface 51b of the first ion exchange membrane 51 and the fourth surface 52b of the second ion exchange membrane 52. In the present disclosure, the phrase that "the first ion exchange membrane 51 and the second ion exchange membrane 52 are integrated" is not limited to a case where the first ion exchange membrane 51 and the second ion exchange membrane 52 are directly bonded to each other, and another layer (for example, an ionomer layer 53 described later) may be present between the first ion exchange membrane 51 and the second ion exchange membrane 52.

The materials of the first ion exchange membrane 51 and the second ion exchange membrane 52 may be the same as or different from each other. For example, the materials of the first ion exchange membrane 51 and the second ion exchange membrane 52 are selected as follows. That is, since the oxidation reaction does not occur in the cathode chamber Sa, the first ion exchange membrane 51 does not need to have high oxidation resistance. Therefore, as the first ion exchange membrane 51, for example, a membrane with a material having higher ion conductivity than the second ion exchange membrane 52 is employed. On the other hand, since an oxidation reaction occurs in the anode chamber Sb, it is preferable that the second ion exchange membrane 52 has high oxidation resistance. Therefore, as the second ion exchange membrane 52, for example, a membrane with a material having higher oxidation resistance than the first ion exchange membrane 51 is employed.

The "membrane having high ion conductivity" is, for example, a membrane containing a polystyrene-based or tetraphenyl-based composition in the main chain and containing an imidazolium group or a quaternary ammonium group in the side chain. The "membrane having high oxidation resistance" is, for example, a membrane containing a polysulfone-based or bromobutylstyrene-based composition.

### (Ionomer Layer)

The ionomer layer 53 is a layer for bonding the first ion exchange membrane 51 and the second ion exchange membrane 52. The ionomer layer 53 is a layer through which a hydroxide ion can pass. The ionomer layer 53 is provided between the second surface 51b of the first ion exchange membrane 51 and the fourth surface 52b of the second ion exchange membrane 52. For example, the ionomer layer 53 is provided in the entire area of the second surface 51b of the first ion exchange membrane 51 and the entire area of the fourth surface 52b of the second ion exchange membrane 52. For example, the thickness of the ionomer layer 53 is 10 nm or more and 10 µm or less. In the present embodiment, the first ion exchange membrane 51 and the second ion exchange membrane 52 are integrated through the ionomer layer 53.

### (Cathode Catalyst Layer)

The cathode catalyst layer 54 is a layer that accelerates the chemical reaction in the cathode chamber Sa described above. For example, the cathode catalyst layer 54 has a rectangular sheet shape. In the present embodiment, the external size of the cathode catalyst layer 54 is smaller than the external size of the first ion exchange membrane 51. The cathode catalyst layer 54 is disposed in the cathode chamber Sa and is adjacent to the first ion exchange membrane 51. In the present application, the term of "adjacent" is not limited to a case where two members are independently adjacent to each other, and at least part of one member of the two members may enter the other member. For example, part of the cathode catalyst layer 54 may enter a surface portion of the first ion exchange membrane 51. In the present embodiment, the cathode catalyst layer 54 is provided on the first surface 51a of the first ion exchange membrane 51. For example, the cathode catalyst layer 54 is formed by applying a material of the cathode catalyst layer 54 to the first surface 51a of the first ion exchange membrane 51. A negative voltage is applied to the cathode catalyst layer 54 from the power supply unit 30 via the first separator 41 and the cathode power supply body 55, and the cathode catalyst layer 54 functions as part of the cathode 47 of the electrolytic cell 11.

As a material of the cathode catalyst layer 54, any material that accelerates the chemical reaction in the cathode chamber Sa described above may be used, and various materials can be used. For example, the cathode catalyst layer 54 contains at least one of nickel, a nickel alloy, a cerium oxide, a lanthanum oxide, or platinum. In the present disclosure, the term of "OO oxide" may contain another material (another element) other than OO and oxygen. In addition, the cathode catalyst layer 54 may include another material such as carbon in addition to the above-described material.

### (Cathode Power Supply Body)

The cathode power supply body 55 is an electrical connection portion that transmits a voltage applied to the first separator 41 to the cathode catalyst layer 54. The cathode power supply body 55 is disposed in the cathode chamber Sa. The cathode power supply body 55 is located between the first inner surface 41a of the first separator 41 and the cathode catalyst layer 54 and is in contact with each of the first inner surface 41a of the first separator 41 and the cathode catalyst layer 54. At least part of the cathode power supply body 55 may overlap at least part of at least one of the first separator 41 or the cathode catalyst layer 54. The cathode power supply body 55 has a structure in which an electrolyte and gas can pass through the inside. For example, the cathode power supply body 55 is made of a metal mesh structure, a sintered body, a fiber, or the like. In the present embodiment, the external size of the cathode power supply body 55 is the same as the external size of the cathode catalyst layer 54. In the present embodiment, the cathode 47 of the electrolytic cell 11 includes the cathode catalyst layer 54 and the cathode power supply body 55.

### (Anode Catalyst Layer)

The anode catalyst layer 56 is a layer that accelerates the chemical reaction in the anode chamber Sb described above. For example, the anode catalyst layer 56 has a rectangular sheet shape. In the present embodiment, the external size of the anode catalyst layer 56 is smaller than the external size of the second ion exchange membrane 52. The anode catalyst layer 56 is disposed in the anode chamber Sb and is adjacent to the second ion exchange membrane 52. For example, part of the anode catalyst layer 56 may enter the surface portion of the second ion exchange membrane 52. In the present embodiment, the anode catalyst layer 56 is provided on the third surface 52a of the second ion exchange membrane 52. For example, the anode catalyst layer 56 is formed by applying a material of the anode catalyst layer 56 to the third surface 52a of the second ion exchange membrane 52. A positive voltage is applied to the anode catalyst layer 56 from the power supply unit 30 via the second separator 42 and the anode power supply body 57, and the anode catalyst layer 56 functions as part of the anode 48 of the electrolytic cell 11.

As a material of the anode catalyst layer 56, any material that accelerates the chemical reaction in the above-described anode chamber Sb may be used, and various materials can be used. For example, the anode catalyst layer 56 contains at least one of nickel, a nickel alloy, a nickel oxide, a copper oxide, an iridium oxide, a niobium oxide, a lead oxide, and a bismuth oxide. As described above, in the present disclosure, the term of "XX oxide" may contain another material (another element) other than XX and oxygen. For example, the term of "nickel oxide" may contain elements such as iron and cobalt, in addition to nickel and oxygen. In addition, the term of "copper oxide" may contain an element such as cobalt, in addition to copper and oxygen. The term of "iridium oxide" may contain an element such as ruthenium, in addition to iridium and oxygen. The term of "lead oxide" may contain an element such as ruthenium, in addition to lead and oxygen. The term of "bismuth oxide" may contain an element such as ruthenium, in addition to bismuth and oxygen.

### (Anode Power Supply Body)

The anode power supply body 57 is an electrical connection portion that transmits the voltage applied to the second separator 42 to the anode catalyst layer 56. The anode power supply body 57 is disposed in the anode chamber Sb. The anode power supply body 57 is located between the second inner surface 42a of the second separator 42 and the anode catalyst layer 56 and is in contact with each of the second inner surface 42a of the second separator 42 and the anode catalyst layer 56. At least part of the anode power supply body 57 may overlap at least part of at least one of the second separator 42 or the anode catalyst layer 56. The anode power supply body 57 has a structure in which an electrolyte and gas can pass through the inside. For example, the anode power supply body 57 is made of a metal mesh structure, a sintered body, a fiber, or the like. In the present embodiment, the external size of the anode power supply body 57 is the same as the external size of the anode catalyst layer 56. In the present embodiment, the anode 48 of the electrolytic cell 11 includes the anode catalyst layer 56 and the anode power supply body 57.

FIG. 3 is an exploded perspective view showing the electrolytic cell 11. For example, the electrolytic cell 11 includes the first current collector 61, the second current collector 62, a first insulator 63, a second insulator 64, a first insulating material 65, a second insulating material 66, a first end plate 67, and a second end plate 68, in addition to the above-described configuration. In FIG. 3, for convenience of description, a support portion 70 and a sealing portion 80 described later are not shown.

### (First Current Collector)

The first current collector 61 is an electrical connection portion that transmits the negative voltage applied from the power supply unit 30 to the first separator 41. The first current collector 61 is a metal plate member (for example, a copper plate). For example, the first current collector 61 is in contact with the first separator 41 from a side of the electrolytic cell 11 opposite to the internal space S and is electrically connected to the first separator 41. A negative voltage desired for the electrolysis in the electrolytic cell 11 is applied to the first current collector 61 from the power supply unit 30. The first current collector 61 may be shared by two electrolytic cells 11 adjacent to each other in the electrolytic cell stack 10.

### (Second Current Collector)

The second current collector 62 is an electrical connection portion that transmits the positive voltage applied from the power supply unit 30 to the second separator 42. The second current collector 62 is a metal plate member (for example, a copper plate). For example, the second current collector 62 is in contact with the second separator 42 from a side of the electrolytic cell 11 opposite to the internal space S and is electrically connected to the second separator 42. A positive voltage desired for the electrolysis in the electrolytic cell 11 is applied to the second current collector 62 from the power supply unit 30. The second current collector 62 may be shared by two electrolytic cells 11 adjacent to each other in the electrolytic cell stack 10.

### (First Insulator)

The first insulator 63 is a member that insulates an outer peripheral portion of the first separator 41 and an outer peripheral portion of the second separator 42. The first insulator 63 is a frame-shaped sheet member that is larger than the outer shape of the cathode catalyst layer 54 and the outer shape of the cathode power supply body 55 by one size. The first insulator 63 is attached to the first inner surface 41a of the first separator 41 and covers an end portion of the first inner surface 41a. The material of the first insulator 63 is not particularly limited as long as the material is an insulating material and is, for example, a sheet-like resin such as polytetrafluoroethylene (PTFE).

### (Second Insulator)

The second insulator 64 is a member that insulates the outer peripheral portion of the first separator 41 and the outer peripheral portion of the second separator 42, similarly to the first insulator 63. The second insulator 64 is a frame-shaped sheet member that is larger than the outer shape of the anode catalyst layer 56 and the outer shape of the anode power supply body 57 by one size. The second insulator 64 is attached to the second inner surface 42a of the second separator 42 and covers an end portion of the second inner surface 42a. The material of the second insulator 64 is not particularly limited as long as the material is an insulating material and is, for example, a sheet-like resin such as PTFE. In addition, the first insulator 63 and the second insulator 64 can also be used as an integrated insulator.

### (First Insulating Material)

The first insulating material 65 is located between the first current collector 61 and the first end plate 67. For example, the external size of the first insulating material 65 is the same as the external size of the first current collector 61 or larger than the external size of the first current collector 61.

### (Second Insulating Material)

The second insulating material 66 is located between the second current collector 62 and the second end plate 68. For example, the external size of the second insulating material 66 is the same as the external size of the second current collector 62 or larger than the external size of the second current collector 62.

### (First End Plate)

The first end plate 67 is located on a side opposite to the first insulating material 65 with respect to the internal space S of the electrolytic cell 11. For example, the external size of the first end plate 67 is larger than the external size of the first insulating material 65.

### (Second End Plate)

The second end plate 68 is located on a side opposite to the second insulating material 66 with respect to the internal space S of the electrolytic cell 11. For example, the external size of the second end plate 68 is larger than the external size of the second insulating material 66.

The electrolytic cell 11 is not limited to the above-described configuration. For example, in a case where a plurality of the electrolytic cells 11 are disposed side by side in the electrolytic cell stack 10, two adjacent electrolytic cells 11 among the plurality of electrolytic cells 11 may share the first separator 41 or the second separator 42, each of which is a bipolar plate. In this case, the current collector (the first current collector 61 or the second current collector 62), the insulator (the first insulator 63 or the second insulator 64), the insulating material (the first insulating material 65 or the second insulating material 66), and the end plate (the first end plate 67 or the second end plate 68) may not be present between the two adjacent electrolytic cells 11.

### <2. 2 Structure of Outer Peripheral Portion of Electrolytic Cell>

FIG. 4 is a cross-sectional view showing the electrolytic cell 11. In the present embodiment, the external size of the first ion exchange membrane 51 is larger than each of the external size of the cathode catalyst layer 54 and the external size of the cathode power supply body 55. In other words, the area of the first ion exchange membrane 51 is larger than each of the area of the cathode catalyst layer 54 and the area of the cathode power supply body 55. The first ion exchange membrane 51 protrudes outside (on the outer peripheral side) the cathode catalyst layer 54 and the cathode power supply body 55 in a direction (for example, the X direction or the Y direction) orthogonal to the thickness direction (Z direction) of the membrane electrode assembly 43. In the present disclosure, the term "outer side" or "outer peripheral side" means a side away from the central portion C of the membrane electrode assembly 43 in a direction (for example, the X direction or the Y direction) orthogonal to the thickness direction (Z direction) of the membrane electrode assembly 43.

Similarly, the external size of the second ion exchange membrane 52 is larger than each of the external size of the anode catalyst layer 56 and the external size of the anode power supply body 57. In other words, in the case of being viewed in the thickness direction (Z direction) of the membrane electrode assembly 43, the area of the second ion exchange membrane 52 is larger than each of the area of the anode catalyst layer 56 and the area of the anode power supply body 57. The second ion exchange membrane 52 protrudes on the outer peripheral side of the anode catalyst layer 56 and the anode power supply body 57 in a direction (for example, the X direction or the Y direction) orthogonal to the thickness direction (Z direction) of the membrane electrode assembly 43. Hereinafter, for convenience of description, the first ion exchange membrane 51 and the second ion exchange membrane 52 are collectively referred to as an "ion exchange membrane laminate 59".

For example, as shown in FIG. 4, the electrolytic cell 11 includes a support portion 70 and a sealing portion 80. The support portion 70 is a member that supports the membrane electrode assembly 43 inside the electrolytic cell 11. The sealing portion 80 is a member that closes the internal space S between the first separator 41 and the second separator 42. Hereinafter, these members will be described.

### (Support Portion)

The support portion 70 is disposed between the first separator 41 and the second separator 42. The support portion 70 is located inside (on the inner peripheral side) an outer edge portion 59e of the ion exchange membrane laminate 59 and supports the ion exchange membrane laminate 59. In the present disclosure, the term "outer edge portion" means an edge portion that is separated from the central portion C of the membrane electrode assembly 43 in a direction (for example, the X direction or the Y direction) orthogonal to the thickness direction (Z direction) of the membrane electrode assembly 43. In addition, in the present disclosure, the term of "inside" or "inner peripheral side" means an inside (a side close to the central portion C) as viewed from the central portion C of the membrane electrode assembly 43. In the present embodiment, for example, the support portion 70 includes a first support portion 71 and a second support portion 72.

### (First Support Portion)

The first support portion 71 is a support portion on the cathode side. The first support portion 71 is disposed between the first inner surface 41a of the first separator 41 and the first surface 51a of the first ion exchange membrane 51. The first support portion 71 is located inside (on the inner peripheral side) the outer edge portion 59e (for example, an outer edge portion 51e of the first ion exchange membrane 51) of the ion exchange membrane laminate 59. The first support portion 71 is sandwiched between the first inner surface 41a (or the first insulator 63) of the first separator 41 and the first surface 51a of the first ion exchange membrane 51 at a position outside (on the outer peripheral side) the cathode catalyst layer 54 and the cathode power supply body 55 and supports the first ion exchange membrane 51 with respect to the first inner surface 41a of the first separator 41. The first support portion 71 is formed in an annular shape (for example, a frame shape) along the outer edge portion 51e of the first ion exchange membrane 51, and in an annular shape that is smaller than the outer edge portion 51e of the first ion exchange membrane 51 by one size.

### (Second Support Portion)

The second support portion 72 is a support portion on the anode side. The second support portion 72 is disposed between the second inner surface 42a of the second separator 42 and the third surface 52a of the second ion exchange membrane 52. The second support portion 72 is located inside (on the inner peripheral side) the outer edge portion 59e (for example, the outer edge portion 52e of the second ion exchange membrane 52) of the ion exchange membrane laminate 59. The second support portion 72 is sandwiched between the second inner surface 42a of the second separator 42 and the third surface 52a of the second ion exchange membrane 52 at a position outside (on the outer peripheral side) the anode catalyst layer 56 and the anode power supply body 57 and supports the second ion exchange membrane 52 with respect to the second inner surface 42a of the second separator 42. The second support portion 72 is formed in an annular shape (for example, a frame shape) along the outer edge portion 52e of the second ion exchange membrane 52, and in an annular shape that is smaller than the outer edge portion 52e of the second ion exchange membrane 52 by one size.

### (Sealing Portion)

The sealing portion 80 is disposed between the first separator 41 and the second separator 42. The sealing portion 80 is located outside (on the outer peripheral side) the outer edge portion 59e (that is, the outer edge portion 51e of the first ion exchange membrane 51 and the outer edge portion 52e of the second ion exchange membrane 52) of the ion exchange membrane laminate 59 and seals the internal space S of the electrolytic cell 11. In the present embodiment, the sealing portion 80 includes a first sealing portion 81 and a second sealing portion 82. However, the first sealing portion 81 and the second sealing portion 82 may be formed integrally. That is, the first sealing portion 81 and the second sealing portion 82 may be one member. In addition, the sealing portion 80 may be formed integrally with at least one of the first insulator 63 and the second insulator 64 described above.

### (First Sealing Portion)

The first sealing portion 81 is a sealing portion on the cathode side. The first sealing portion 81 is located outside (on the outer peripheral side) the outer edge portion 59e of the ion exchange membrane laminate 59. The first sealing portion 81 is sandwiched between the first inner surface 41a of the first separator 41 and the second sealing portion 82 and seals part of the outer peripheral side of the internal space S. The first sealing portion 81 is formed in an annular shape (for example, a frame shape) along the outer edge portion 51e of the first ion exchange membrane 51, and in an annular shape that is larger than the outer edge portion 51e of the first ion exchange membrane 51 by one size.

### (Second Sealing Portion)

The second sealing portion 82 is a sealing portion on the anode side. The second sealing portion 82 is located outside the outer edge portion 59e of the ion exchange membrane laminate 59. The second sealing portion 82 is sandwiched between the second inner surface 42a of the second separator 42 and the first sealing portion 81 and seals part of the outer peripheral side of the internal space S. The second sealing portion 82 is formed in an annular shape (for example, a frame shape) along the outer edge portion 52e of the second ion exchange membrane 52, and in an annular shape that is larger than the outer edge portion 52e of the second ion exchange membrane 52 by one size.

### <3. Method of Manufacturing Membrane Electrode Assembly>

Next, a method of manufacturing the membrane electrode assembly 43 will be described.

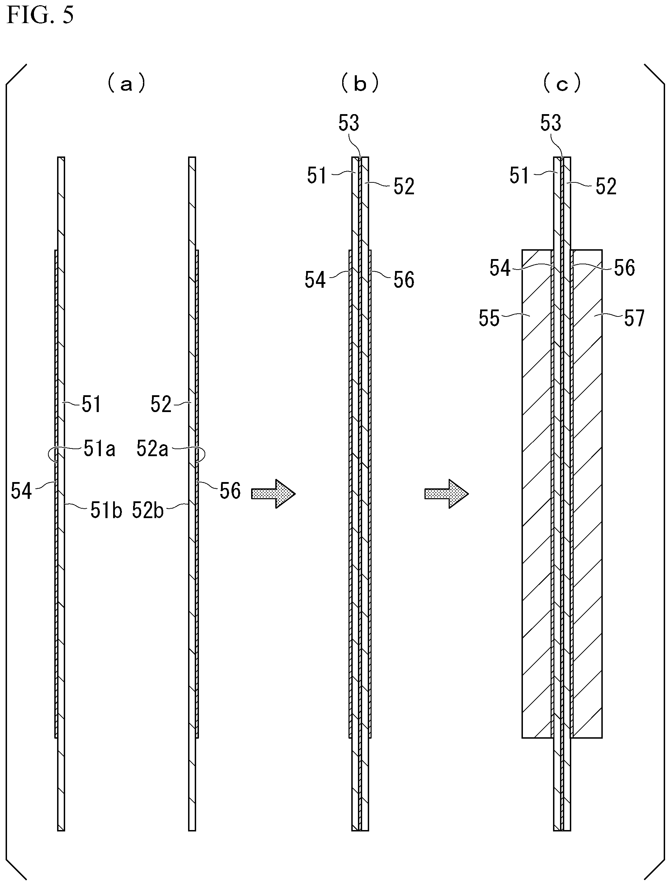

FIG. 5 is a cross-sectional view showing the method of manufacturing the membrane electrode assembly 43.

First, as shown in (a) of FIG. 5, the cathode catalyst layer 54 is provided on the first surface 51a of the first ion exchange membrane 51. For example, the cathode catalyst layer 54 is formed by applying (coating) a material of the cathode catalyst layer 54 to the first surface 51a of the first ion exchange membrane 51 and pressing the applied material of the cathode catalyst layer 54 and the first ion exchange membrane 51 at a predetermined temperature and a predetermined pressure. Similarly, the anode catalyst layer 56 is provided on the third surface 52a of the second ion exchange membrane 52. For example, the anode catalyst layer 56 is formed by applying (coating) a material of the anode catalyst layer 56 to the third surface 52a of the second ion exchange membrane 52 and pressing the applied material of the anode catalyst layer 56 and the second ion exchange membrane 52 at a predetermined temperature and a predetermined pressure. For the application of the material of the cathode catalyst layer 54 and the material of the anode catalyst layer 56, for example, a coating method, a chemical vapor deposition (CVD) method, an electroless plating method, a method using a catalyst ink, a method of applying a catalyst by spraying, or the like can be appropriately used.

In the present embodiment, a step of providing the cathode catalyst layer 54 on the first ion exchange membrane 51, and a step of providing the anode catalyst layer 56 on the second ion exchange membrane 52 are performed before the first ion exchange membrane 51 and the second ion exchange membrane 52 are integrated. In addition, the step of providing the cathode catalyst layer 54 on the first ion exchange membrane 51 and the step of providing the anode catalyst layer 56 on the second ion exchange membrane 52 are performed as steps (separate steps) independent of each other. Therefore, the step of providing the cathode catalyst layer 54 on the first ion exchange membrane 51 does not or is unlikely to affect the step of providing the anode catalyst layer 56 on the second ion exchange membrane 52. In addition, conversely, the step of providing the anode catalyst layer 56 on the second ion exchange membrane 52 does not or is unlikely to affect the step of providing the cathode catalyst layer 54 on the first ion exchange membrane 51.

Next, as shown in (b) of FIG. 5, the first ion exchange membrane 51 and the second ion exchange membrane 52 are integrated with each other by facing the second surface 51b of the first ion exchange membrane 51 and the fourth surface 52b of the second ion exchange membrane 52 face each other. For example, the first ion exchange membrane 51 and the second ion exchange membrane 52 are bonded to each other through the ionomer layer 53 by making the second surface 51b of the first ion exchange membrane 51 and the fourth surface 52b of the second ion exchange membrane 52 face each other and pressing the first ion exchange membrane 51 and the second ion exchange membrane 52 at a predetermined temperature and a predetermined pressure, in a state where each of the second surface 51b of the first ion exchange membrane 51 and the fourth surface 52b of the second ion exchange membrane 52 are applied (coated) with the material of the ionomer layer 53.

Next, as shown in (c) of FIG. 5, the cathode power supply body 55 is bonded to the cathode catalyst layer 54 from a side opposite to the first ion exchange membrane 51. The bond of the cathode power supply body 55 to the cathode catalyst layer 54 is performed, for example, by applying pressure by pressing. Similarly, the anode power supply body 57 is bonded to the anode catalyst layer 56 from a side opposite to the second ion exchange membrane 52. The bond of the anode power supply body 57 to the anode catalyst layer 56 is performed, for example, by applying pressure. As a result, the membrane electrode assembly 43 is completed.

### <4. Effects>

As a first comparative example, a structure in which a cathode catalyst layer and an anode catalyst layer are provided on both surfaces of one ion exchange membrane will be considered. Here, it is not easy to uniformly provide the catalyst layer on the surface of the ion exchange membrane which is a thin membrane. Therefore, in a step of providing the catalyst layer on one surface (first surface) of both surfaces of the ion exchange membrane, an uneven portion may occur in the catalyst layer. In this case, thereafter, the uneven portion may affect a step of providing a catalyst layer on the other surface (second surface) of both surfaces of the ion exchange membrane. For example, in a case where a thick portion and a thin portion are generated in the catalyst layer on the first surface of the ion exchange membrane, the thick portion and the thin portion are further likely to be generated on the second surface of the ion exchange membrane under the influence thereof. Therefore, when a current is passed through the completed electrolytic cell, the current density distribution varies depending on the position in the ion exchange membrane, and a portion causing a defect such as a short circuit may occur. As a result, the performance of the membrane electrode assembly may be unstable. For example, this tendency increases in a case where the material of the cathode catalyst layer and the material of the anode catalyst layer are different from each other and the difference in specific gravity or the composition of the materials is involved. In addition, in order to uniformly provide the catalyst layer on the surface of the ion exchange membrane, it is necessary to increase the thickness of the ion exchange membrane to some extent. However, when the thickness of the ion exchange membrane is increased, it is difficult to improve the performance of the membrane electrode assembly. In addition, in a case where the cathode catalyst layer and the anode catalyst layer are provided on both surfaces of the ion exchange membrane, handling in the manufacturing process may be difficult, and productivity may be reduced.

On the other hand, in the present embodiment, the membrane electrode assembly 43 includes the first ion exchange membrane 51 and the second ion exchange membrane 52. According to such a configuration, by providing the cathode catalyst layer 54 on one surface of the first ion exchange membrane 51, providing the anode catalyst layer 56 on one surface of the second ion exchange membrane 52 and then integrating the first ion exchange membrane 51 and the second ion exchange membrane 52, it is possible to suppress the influence of the uneven portion of the catalyst layer present on one surface of the ion exchange membrane on the manufacturing of the catalyst layer on the other surface of the ion exchange membrane. As a result, it is possible to suppress the occurrence of a portion that causes a defect such as a short circuit. As a result, it is possible to improve the stability of the performance of the membrane electrode assembly 43. In addition, when the catalyst layer is likely to be provided uniformly on the surface of the ion exchange membrane, the thickness of the ion exchange membrane (the thickness of the first ion exchange membrane 51 and the second ion exchange membrane 52) is likely to be reduced. When the thickness of the ion exchange membrane can be reduced, the performance of the membrane electrode assembly 43 can be improved. In addition, in the present embodiment, since two ion exchange membranes, each of which has a catalyst layer on one surface, can be separately handled, handling in the manufacturing process is facilitated, and productivity can be improved.

### <5. Modification Example>

Next, a modification example of the first embodiment will be described.

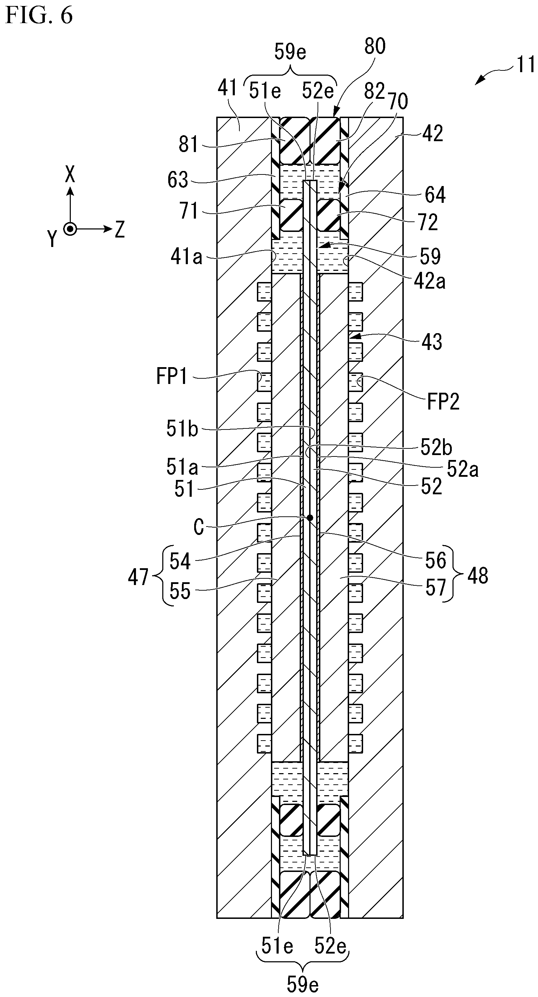

FIG. 6 is a cross-sectional view showing an electrolytic cell 11 according to a modification example of the first embodiment. In the first embodiment described above, the ionomer layer 53 is provided between the first ion exchange membrane 51 and the second ion exchange membrane 52. Instead, in the present modification example, the ionomer layer 53 is not provided between the first ion exchange membrane 51 and the second ion exchange membrane 52. That is, the second surface 51b of the first ion exchange membrane 51 and the fourth surface 52b of the second ion exchange membrane 52 are in contact with each other. For example, the first ion exchange membrane 51 and the second ion exchange membrane 52 are integrated by pressing (compressing) the second surface 51b of the first ion exchange membrane 51 and the fourth surface 52b of the second ion exchange membrane 52 by facing each other.

Even with such a configuration, since the step of providing the cathode catalyst layer 54 on the first ion exchange membrane 51 and the step of providing the anode catalyst layer 56 on the second ion exchange membrane 52 can be separately performed, it is possible to suppress the influence of the uneven portion of the catalyst layer present on one surface of the ion exchange membrane on the manufacturing of the catalyst layer on the other surface of the ion exchange membrane.

### (Second Embodiment)

Next, a second embodiment will be described. The second embodiment is different from the first embodiment in that the area of the anode 48 is larger than the area of the cathode 47. Configurations other than those described below are the same as the configurations of the first embodiment.

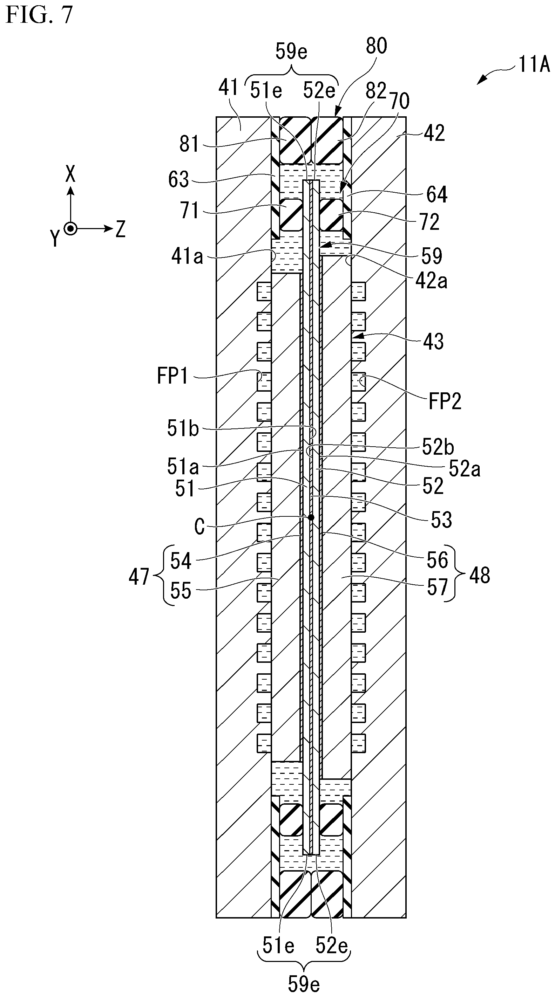

FIG. 7 is a cross-sectional view showing an electrolytic cell 11A of a second embodiment. In the present embodiment, the area of the anode 48 is larger than the area of the cathode 47. For example, the area of the anode catalyst layer 56 is larger than the area of the cathode catalyst layer 54. In addition, the area of the anode power supply body 57 is larger than the area of the cathode power supply body 55.

In the present embodiment, the area ratio of the anode 48 to the cathode 47 is more than 1.0 and 1.3 or less. In addition, from another viewpoint, in the present embodiment, the area ratio of the anode 48 to the cathode 47 is set such that a rate of increase in the overvoltage of the anode 48 due to the progress of deterioration is less than 2 times (more preferably less than 1.5 times) as compared with a rate of increase in the overvoltage of the cathode 47. Hereinafter, these contents will be described in detail.

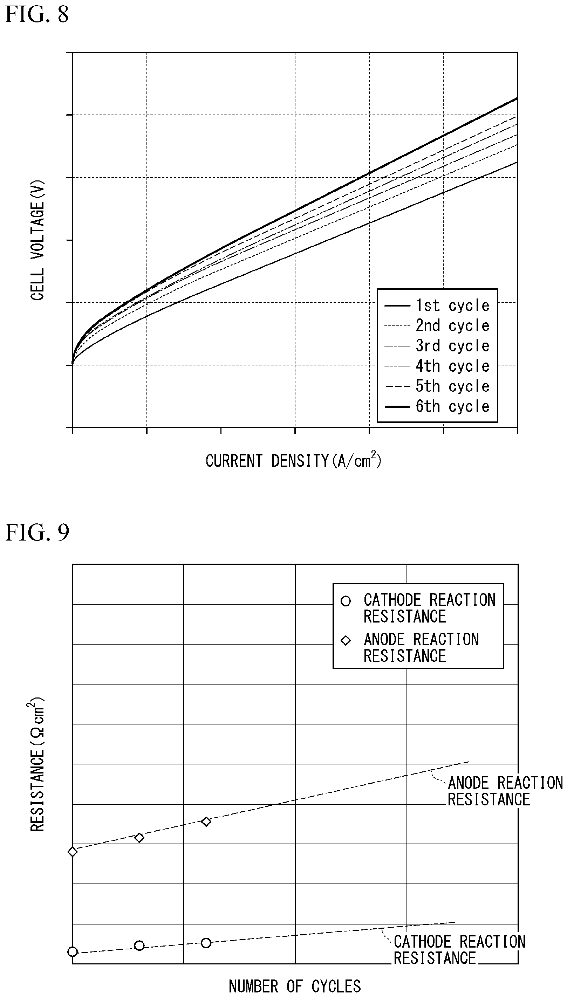

FIG. 8 is a graph describing the action of the electrolytic cell 11A. FIG. 8 is a graph showing test results of the current-voltage characteristics in the electrolytic cell of the second comparative example in which the area of the anode and the area of the cathode are the same. In FIG. 8, the term of "cycle" means a predetermined period set in advance. As shown in FIG. 8, it is found that the overvoltage increases as the number of cycles increases (that is, as the use time increases) in the electrolytic cell of the second comparative example.

FIG. 9 is another graph describing the action of the electrolytic cell 11A. FIG. 9 is a graph showing the test results of a relationship between the number of cycles and the reaction resistance in the electrode in the second comparative example. As shown in FIG. 9, the reaction resistance in the anode 48 has an absolute value larger than the reaction resistance in the cathode 47. Furthermore, a rate of increase in the reaction resistance in the anode 48 due to the progress of deterioration is larger than a rate of increase in the reaction resistance in the cathode 47 due to the progress of deterioration. For example, the rate of increase in reaction resistance in the anode 48 is 2 times or more as compared with the rate of increase in reaction resistance in the cathode 47. This is because an oxidation reaction occurs at the anode 48, and the deterioration of the anode 48 is larger than the deterioration of the cathode 47.

Therefore, in the present embodiment, the area of the anode 48 is formed larger than the area of the cathode 47. According to such a configuration, the oxidation reaction in the anode 48 can be dispersed over a wide area of the anode 48. As a result, it is possible to suppress the deterioration of the anode 48 from being larger than that of the cathode 47, as compared with the above second comparative example. When it is possible to suppress the deterioration of the anode 48 from being larger than that of the cathode 47, it is possible to suppress an increase in the overvoltage and improve the performance and the life of the electrolytic cell 11A.

In the present embodiment, the cathode catalyst layer 54 is provided on the first ion exchange membrane 51, and the anode catalyst layer 56 is provided on the second ion exchange membrane 52. According to such a configuration, it is easy to easily form the cathode catalyst layer 54 and the anode catalyst layer 56 having different areas. Therefore, according to the present embodiment, it is possible to improve the productivity of the membrane electrode assembly 43 in which the area of the anode 48 is larger than the area of the cathode 47.

According to another viewpoint, in each of the cathode catalyst layer 54 and the anode catalyst layer 56, the current is likely to flow around at an end portion of the catalyst layer, and the current density is likely to increase at the end portion of the catalyst layer. Therefore, in a case where the areas of the cathode catalyst layer and the anode catalyst layer are the same as in the second comparative example, since the end portions of the catalyst layers having a high current density face each other, local deterioration is likely to increase at the end portion of each catalyst layer.

On the other hand, in the present embodiment, since the anode catalyst layer 56 is larger than the cathode catalyst layer 54, the end portions of each catalyst layer having a high current density are shifted from each other. As a result, the deterioration is unlikely to increase at the end portion of each catalyst layer. From this viewpoint as well, it is possible to suppress an increase in the overvoltage and improve the performance and the life of the electrolytic cell 11A.

As shown in FIG. 9, in the test results of the relationship between the number of cycles and the reaction resistance in the electrode in the second comparative example, the rate of increase in the reaction resistance in the anode 48 is 2 times or more as compared with the rate of increase in the reaction resistance in the cathode 47. In the present embodiment, the area ratio of the anode 48 to the cathode 47 is set based on the rate of increase in reaction resistance in the anode 48 and the rate of increase in reaction resistance in the cathode 47. That is, the area ratio of the anode 48 to the cathode 47 is adjusted and determined such that a difference between the rate of increase in the reaction resistance of the anode 48 and the rate of increase in the reaction resistance of the cathode 47 is equal to or less than a predetermined standard (for example, less than 2 times, and more preferably less than 1.5 times).

In the present embodiment, the catalyst carrying amount of the anode catalyst layer 56 is equal to or greater than the catalyst carrying amount of the cathode catalyst layer 54. In the present disclosure, the term of "catalyst carrying amount" means the weight of the catalyst per unit area [mg/cm²].

### (Third Embodiment)

Next, a third embodiment will be described. The third embodiment is different from the second embodiment in that the thickness of the anode catalyst layer 56 is larger than the thickness of the cathode catalyst layer 54.

Configurations other than those described below are the same as the configurations of the second embodiment.

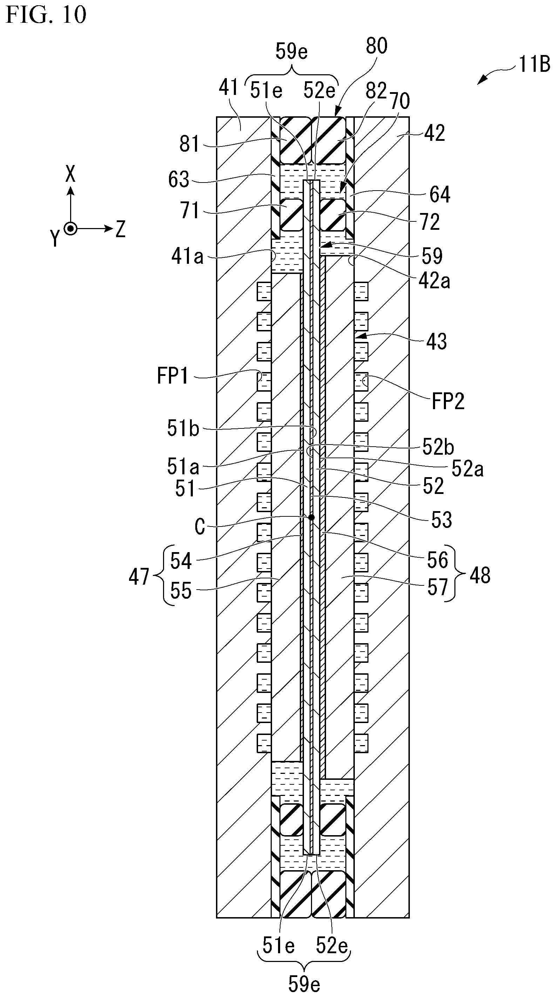

FIG. 10 is a cross-sectional view showing an electrolytic cell 11B of the third embodiment. In the present embodiment, the area of the anode catalyst layer 56 is larger than the area of the cathode catalyst layer 54, and the thickness of the anode catalyst layer 56 is thicker than the thickness of the cathode catalyst layer 54. The catalyst carrying amount of the anode catalyst layer 56 is equal to or greater than the catalyst carrying amount of the cathode catalyst layer 54.

In the present embodiment, the volume ratio (or the catalyst carrying amount ratio) of the anode catalyst layer 56 to the cathode catalyst layer 54 is set such that the rate of increase in the overvoltage of the anode 48 due to the progress of deterioration is less than 2 times (more preferably less than 1.5 times) as compared with the rate of increase in the overvoltage of the cathode 47. In other words, the volume ratio of the anode 48 to the cathode 47 is adjusted and determined such that a difference between the rate of increase in the reaction resistance of the anode 48 and the rate of increase in the reaction resistance of the cathode 47 is equal to or less than a predetermined standard (for example, less than 2 times, and more preferably less than 1.5 times).

According to such a configuration, it is possible to suppress the deterioration of the anode 48 from being larger than that of the cathode 47. Therefore, it is possible to suppress an increase in the overvoltage and improve the performance and the life of the electrolytic cell 11B.

### (Other Embodiments)

The embodiments of the present disclosure have been described above in detail with reference to the drawings. However, the specific configurations are not limited to the embodiments and include a design modification or the like within a scope that does not depart from the gist of the present disclosure. For example, the member that bonds the first ion exchange membrane 51 and the second ion exchange membrane 52 is not limited to the ionomer layer 53 and may be an adhesive layer made of another material having hydroxide ion conductivity.

### <Appendix>

The membrane electrode assembly 43, the electrolytic cells 11, 11A, and 11B, the electrolysis device 1, and the method of manufacturing the membrane electrode assembly 43, which are described in each embodiment, are grasped as follows, for example.

(1) The membrane electrode assembly 43 according to a first aspect includes the first ion exchange membrane 51, the second ion exchange membrane 52, the cathode catalyst layer 54, and the anode catalyst layer 56. The first ion exchange membrane 51 includes the first surface 51a and the second surface 51b located on a side opposite to the first surface 51a. The second ion exchange membrane 52 includes the third surface 52a and the fourth surface 52b located on a side opposite to the third surface 52a. The cathode catalyst layer 54 is provided on the first surface 51a of the first ion exchange membrane 51. The anode catalyst layer 56 is provided on the third surface 52a of the second ion exchange membrane 52. The first ion exchange membrane 51 and the second ion exchange membrane 52 are anion exchange membranes having hydroxide ion conductivity and are integrated by making the second surface 51b of the first ion exchange membrane 51 and the fourth surface 52b of the second ion exchange membrane 52 face each other. According to such a configuration, it is possible to suppress the occurrence of a portion that causes a defect such as a short circuit.
   As a result, it is possible to improve the stability of the performance of the electrolysis device 1. In addition, since two ion exchange membranes each of which has a catalyst layer on one surface can be separately handled, handling is facilitated, and productivity can be improved.
(2) The membrane electrode assembly 43 according to a second aspect is the membrane electrode assembly 43 according to the first aspect and may further include an ionomer layer 53 between the second surface 51b of the first ion exchange membrane 51 and the fourth surface 52b of the second ion exchange membrane 52. According to such a configuration, the first ion exchange membrane 51 and the second ion exchange membrane 52 can be favorably bonded to each other through the ionomer layer 53. As a result, it is possible to improve the stability of the performance of the electrolysis device 1 at a higher level.
(3) The membrane electrode assembly 43 according to a third aspect is the membrane electrode assembly 43 according to the first or second aspect, in which the thickness of the ionomer layer 53 may be 10 nm or more and 10 µm or less. According to such a configuration, the first ion exchange membrane 51 and the second ion exchange membrane 52 can be favorably bonded to each other through the ionomer layer 53 having an appropriate thickness. As a result, it is possible to improve the stability of the performance of the electrolysis device 1 at a higher level.
(4) The membrane electrode assembly 43 according to a fourth aspect is the membrane electrode assembly 43 according to any one of the first to third aspects, in which the second surface 51b of the first ion exchange membrane 51 and the fourth surface 52b of the second ion exchange membrane 52 may be in contact with each other. According to such a configuration, the first ion exchange membrane 51 and the second ion exchange membrane 52 are integrated without using the ionomer layer 53. As a result, the performance of the electrolysis device 1 may be further improved.
(5) The membrane electrode assembly 43 according to a fifth aspect is the membrane electrode assembly 43 according to any one of the first to fourth aspects, in which the cathode catalyst layer 54 may contain at least one of nickel, a nickel alloy, a cerium oxide, a lanthanum oxide, or platinum, and the anode catalyst layer 56 may contain at least one of nickel, a nickel alloy, a nickel oxide, a copper oxide, an iridium oxide, a niobium oxide, a lead oxide, or a bismuth oxide. According to such a configuration, it is possible to cause an appropriate reaction to occur at each of the cathode 47 and the anode 48.
(6) The membrane electrode assembly 43 according to a sixth aspect is the membrane electrode assembly 43 according to any one of the first to fifth aspects, in which the material of the first ion exchange membrane 51 and the material of the second ion exchange membrane 52 may be different from each other. According to such a configuration, it is possible to further improve the performance of the electrolysis device 1.
(7) The membrane electrode assembly 43 according to a seventh aspect is the membrane electrode assembly 43 according to any one of the first to sixth aspects, in which the material of the second ion exchange membrane 52 may have higher oxidation resistance than the material of the first ion exchange membrane 51. According to such a configuration, it is possible to suppress the deterioration of the anode 48 from being greater than the deterioration of the cathode 47.
(8) The membrane electrode assembly 43 according to an eighth aspect is the membrane electrode assembly 43 according to any one of the first to seventh aspects, in which the material of the first ion exchange membrane 51 may have higher ion conductivity than the material of the second ion exchange membrane 52. According to such a configuration, it is possible to further improve the performance of the electrolysis device 1.
(9) The membrane electrode assembly 43 according to a ninth aspect is the membrane electrode assembly 43 according to any one of the first to eighth aspects, in which the area of the anode 48 may be larger than the area of the cathode 47. According to such a configuration, it is possible to suppress the deterioration of the anode 48 from being greater than the deterioration of the cathode 47. As a result, the performance and the life of the electrolytic cells 11A and 11B can be improved.
(10) The membrane electrode assembly 43 according to a tenth aspect is the membrane electrode assembly 43 according to the first aspect, in which the catalyst carrying amount of the anode catalyst layer 56 may be equal to or greater than the catalyst carrying amount of the cathode catalyst layer 54.
(11) The electrolytic cells 11, 11A, and 11B according to an eleventh aspect include the first separator 41, the second separator 42, and the membrane electrode assembly 43 according to any one of the first to tenth aspects configured to be disposed between the first separator 41 and the second separator 42. According to such a configuration, it is possible to improve the stability of the performance of the electrolytic cells 11, 11A, and 11B and to improve the productivity.
(12) An electrolysis device 1 according to a twelfth aspect includes the electrolytic cells 11, 11A, and 11B according to the eleventh aspect, the electrolyte supply unit 20 configured to supply an electrolyte to the electrolytic cells 11, 11A, and 11B, and the power supply unit 30 configured to apply a voltage to the electrolytic cells 11, 11A, and 11B. According to such a configuration, it is possible to improve the stability of the performance of the electrolysis device 1 and to improve the productivity.
(13) An electrolysis device 1 according to a thirteenth aspect is the electrolysis device 1 according to the twelfth aspect, further include the electrolytic cell stack 10 configured to have a plurality of electrolytic cells having the electrolytic cells 11, 11A, and 11B, in which two adjacent electrolytic cells among the plurality of electrolytic cells may share the first separator 41 or the second separator 42, which is a bipolar plate. According to such a configuration, it is possible to improve the stability of the performance of the electrolysis device 1 having the electrolytic cell stack 10 and to improve the productivity.
(14) A method of manufacturing a membrane electrode assembly 43 according to a fourteenth aspect, the method includes providing the cathode catalyst layer 54 on the first surface 51a of the first ion exchange membrane 51, providing the anode catalyst layer 56 on the third surface 52a of the second ion exchange membrane 52, and then integrating the first ion exchange membrane 51 and the second ion exchange membrane 52 by making the second surface 51b of the first ion exchange membrane 51 and the fourth surface 52b of the second ion exchange membrane 52 face each other. According to such a configuration, it is possible to improve the stability of the performance of the electrolysis device 1 and to improve the productivity.

### REFERENCE SIGNS LIST

1 Electrolysis device
10 Electrolytic cell stack
11, 11A, 11B Electrolytic cell
20 Electrolyte supply unit
30 Power supply unit
40 Electrolyzer
41 First separator
42 Second separator
47 Cathode
48 Anode
51 First ion exchange membrane
51a First surface
51b Second surface
52 Second ion exchange membrane
52a Third surface
52b Fourth surface
53 Ionomer layer
54 Cathode catalyst layer
55 Cathode power supply body
56 Anode catalyst layer
57 Anode power supply body

## Claims

1. A membrane electrode assembly comprising:
a first ion exchange membrane that has a first surface and a second surface located on a side opposite to the first surface;
a second ion exchange membrane that has a third surface and a fourth surface located on a side opposite to the third surface;
a cathode catalyst layer configured to be provided on the first surface; and an anode catalyst layer configured to be provided on the third surface,
wherein the first ion exchange membrane and the second ion exchange membrane are anion exchange membranes having hydroxide ion conductivity and are integrated by making the second surface and the fourth surface face each other.

2. The membrane electrode assembly according to Claim 1, further comprising:
an ionomer layer between the second surface and the fourth surface.

3. The membrane electrode assembly according to Claim 2,
wherein a thickness of the ionomer layer is 10 nm or more and 10 µm or less.

4. The membrane electrode assembly according to Claim 1,
wherein the second surface and the fourth surface are in contact with each other.

5. The membrane electrode assembly according to Claim 1,
wherein the cathode catalyst layer contains at least any one of nickel, a nickel alloy, a cerium oxide, a lanthanum oxide, and platinum, and
the anode catalyst layer contains at least any one of nickel, a nickel alloy, a nickel oxide, a copper oxide, an iridium oxide, a niobium oxide, a lead oxide, and a bismuth oxide.

6. The membrane electrode assembly according to Claim 1,
wherein a material of the first ion exchange membrane and a material of the second ion exchange membrane are different from each other.

7. The membrane electrode assembly according to Claim 6,
wherein the material of the second ion exchange membrane has higher oxidation resistance than the material of the first ion exchange membrane.

8. The membrane electrode assembly according to Claim 6,
wherein the material of the first ion exchange membrane has higher ion conductivity than the material of the second ion exchange membrane.

9. The membrane electrode assembly according to Claim 1,
wherein an area of the anode catalyst layer is larger than an area of the cathode catalyst layer.

10. The membrane electrode assembly according to Claim 1,
wherein a catalyst carrying amount of the anode catalyst layer is equal to or greater than a catalyst carrying amount of the cathode catalyst layer.

11. An electrolytic cell comprising:
a first separator;
a second separator; and
the membrane electrode assembly according to any one of Claims 1 to 10 configured to be disposed between the first separator and the second separator.

12. An electrolysis device comprising:
the electrolytic cell according to Claim 11;
an electrolyte supply unit configured to supply an electrolyte to the electrolytic cell; and
a power supply unit configured to apply a voltage to the electrolytic cell.

13. The electrolysis device according to Claim 12, further comprising:
an electrolytic cell stack that has a plurality of electrolytic cells having the electrolytic cell,
wherein two adjacent electrolytic cells among the plurality of electrolytic cells share the first separator or the second separator, which is a bipolar plate.

14. A method of manufacturing a membrane electrode assembly, the method comprising:
providing a cathode catalyst layer on a first surface of a first ion exchange membrane;
providing an anode catalyst layer on a third surface of a second ion exchange membrane; and
integrating the first ion exchange membrane and the second ion exchange membrane by making a second surface of the first ion exchange membrane and a fourth surface of the second ion exchange membrane, after providing the cathode catalyst layer on the first surface and providing the anode catalyst layer on the third surface face each other.
